# EUROPEAN PATENT SPECIFICATION

(11) **EP 0 448 561 B1**
(45) Date of publication and mention of the grant of the patent: **28.04.1993**
(21) Application number: 89906848.0
(22) Date of filing: 25.05.1989
(51) Int. Cl.: E01D 15/14, B65G 67/62, B65G 69/28

(54) **Ramp for ferry berths or the like**
Rampe für Ferryboote oder ähnliche
Ponton pour bateaux ferry et analogues

(30) Priority: 26.05.1988 NO 882326
(43) Date of publication of application: 02.10.1991
(73) Proprietor: IVARSSON, Tore, S-415 07 Göteborg (SE)
(72) Inventor: IVARSSON, Tore, S-415 07 Göteborg (SE)
(74) Representative: Roth, Ernst Adolf Michael
(86) International application number: SE8900297
(87) International publication number: WO8911564

(56) References cited:
- EP-A- 0 245 227
- WO-A-88/07605
- DE-A- 2 812 996
- GB-A- 2 097 737
- SE-B- 4 513 73

## Description

The present invention refers to a ramp for a ferry berth or the like, one end of which is connected to a quay structure and the opposite end thereof, which is vertically adjustable relative to the water surface, is supported by a floating member and which ramp on the quay side is pivotably connected to a flap. Such a ramp is known from a document such as EP-A-0245227.

The conventional type of ramps for ferry berths, at its interconnection with and disconnection from the ferry, is raised and lowered by means of heavy hydraulic piston-cylinder arrangements provided at the edge of the quay. The ramp is generally a cantilever structure, which in view of local circumstances must be designed with an overhang over the edge of the quay, and the hydraulic system therefore must be very extensive like the mechanism controlling and guiding the ramp. This mechanism furthermore must be able to absorb the forces arising when the ferry lands, which means that the ramp must be able to move relative to the quay structure.

Landing ramps have also been proposed, where the quay side of the ramp is elastically supported, whereas its opposite end is supported by a pontoon float, but these landing ramps either must be equipped with an additional section, which can be raised and lowered thus that the ramp can be adapted to the height level of the ferry, or the float must be designed in such a manner that its displacement may be altered.

The purpose of the present invention is to provide a ramp having a structurally simple, balanced design, which on one hand may be vertically adjusted by means of small hydraulic appliances and on the other hand may absorb big horizontal forces from the ferry, which forces are not transferred to the hydraulic appliances. These tasks have been solved in that the flap is supported in guides fixedly connected to the quay structure in order to be linearly displaceable in the longitudinal direction of the ramp and that at some distance from the pivot common to the ramp and the flap there is provided on the traffic access ramp and on the flap at least one actuator intended for pivoting the ramp relative to the flap about said pivot.

The invention hereinafter will be further described with reference to the accompanying drawings, which show two embodiments.
Fig. 1 shows the ramp according to the invention in a view from above.
Fig. 2 is a section along line II-II in Fig. 1.
Fig. 3 shows in bigger scale a portion of the quay structure and the ramp in a view from above in accordance with a slightly modified embodiment.
Fig. 4 shows a section along line IV-IV in Fig. 3.
Fig. 5 is a view analogous with Fig. 3 showing a further embodiment of the device according to the invention.
Fig. 6 is a section along line VI-VI in Fig. 5.

The ramp according to the invention, in the drawings designated 11, at one of its ends, the end 13 facing the quay 12, on one hand is elastically connected to two quay structures 14 and on the other hand is articulatedly connected to a flap 15. At the end 16 of the ramp facing away from the quay is provided a floating element 17, which via a stand 18 supports the foremost end of the ramp. The floating element 17 may be trimmed with a suitable ballast for level adjustment of the ramp 11.

The quay structures 14, which are firmly connected to the quay 12, are equipped with heavy energy absorbing shock absorbers 19, e.g. made from a rubber material, which in turn are connected to transverse beams 20 attached to the ramp 11. The shock absorbers 19 may be arranged beside the ramp or below the same. The flap 15 is articulatedly connected to the ramp 11 via a pivot 21.

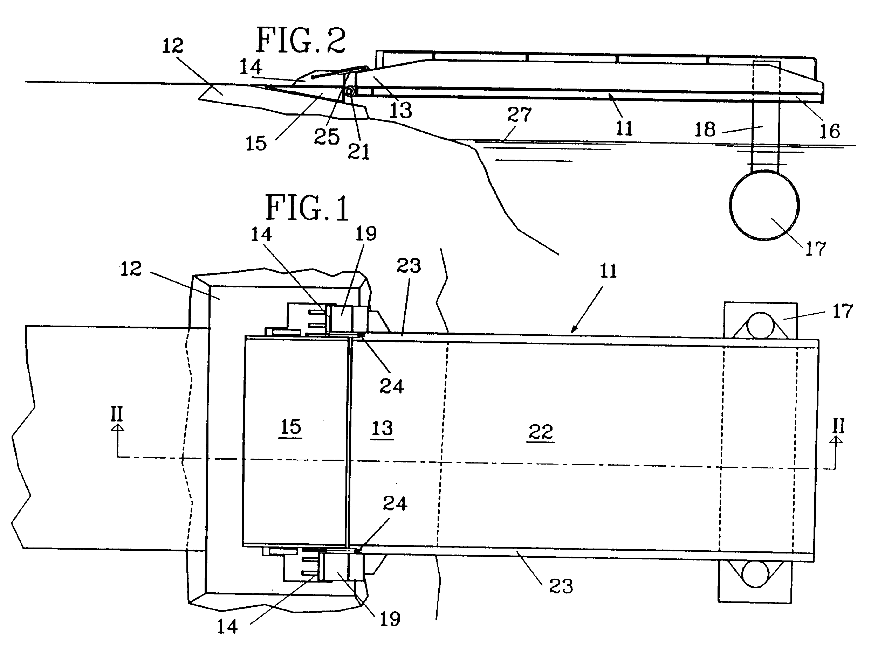

In the embodiment shown in Fig. 1 and 2, and Fig. 3 and 4, attachments 24 for a hydraulic actuator 25 are provided beside the carriage-way 22 on the ramp at longitudinal side beams 23 on the ramp, the opposite end of said actuator being connected to an attachment 26 provided on the flap 15. The flap 15, which is wedge-shaped, is loosely arranged upon the quay 12, thus that it may make the movements caused by sea and by the forces to which the ramp is subjected during landing of the ferry. In order to prevent the flap 15 from being lifted from the quay 12, the flap cooperates with guides 28 firmly connected to the quay in parallel with the side edges 29 of the flap 15, force absorbing members 30, preferably in form of sliding blocks, rollers or the like being provided on said guides.

The floating element 17 is provided at such a depth, that the water swell does not influence it or has only an insignificant influence thereon. The ramp 11 and its floating element 17 are furthermore so balanced that only comparatively weak actuators 25 are required for lifting the free front end of the ramp so much, that the attachment console of the ferry (not shown) can be moved below the raised ramp, which is thereupon lowered towards the ferry. The fixed guides 28 on both sides of the flap 15 prevent the flap from lifting when the ramp is swung upwards about the pivot 21, but at the same time it makes it possible for the ramp 11 and the flap 15 to make the horizontal movements occuring at swell and when the ferry is landing.

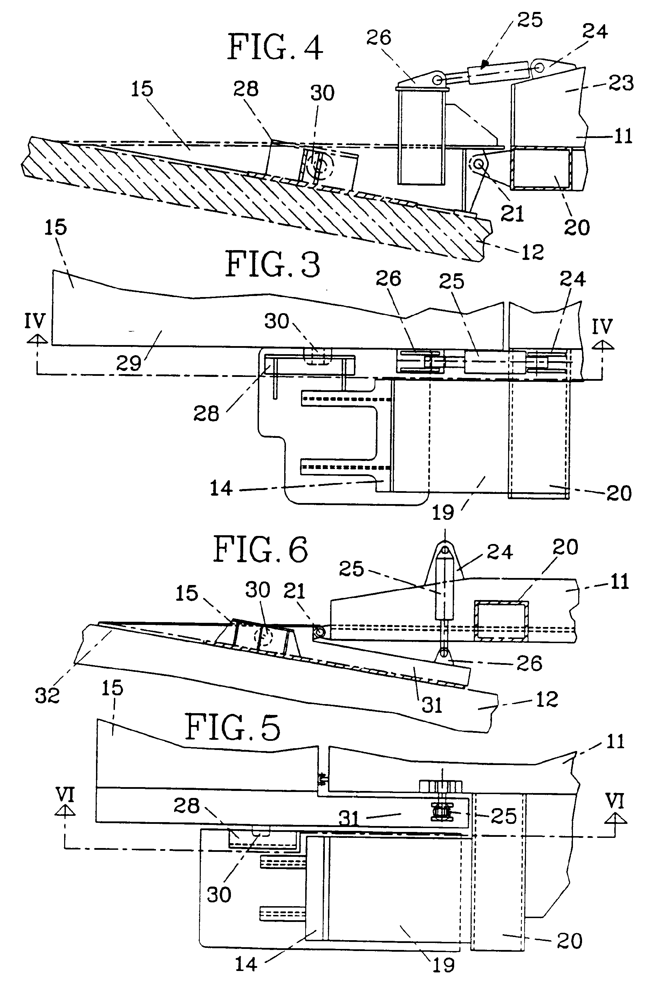

The embodiment shown in Fig. 5 and 6 differs from the previous embodiment in that each one of the hydralic actuators 25 is directed mainly vertically downward from the attachment 24 of the ramp towards one beam 31 each, which beams form an extension of the flap which is parallel to the ramp. When in this embodiment the ramp 11 is swung upwardly, the front part of the flap, i.e. mainly the beams 31, will press against the quay 12, whereas the flap 15 is prevented from raising from the quay due to its cooperation with the guides 28. The energy absorbing members 19 can be positioned at a distance from each other, thus that the force couple created makes it possible to refrain from additional side anchoring of the ramp.

When more broad ramps are desired, it is possible to interconnect several ramps of the type described above in parallel, thus that a multi-ferry berth is created. Two adjacent ramps preferably can share a common floating element.

## Claims

1. A ramp (11) for a ferry berth or the like, one end (13) of which is elastically connected to a quay structure (14) and the opposite end thereof (16), which is vertically adjustable relative to the water surface (27), is supported by a floating element (17), and which ramp on the quay side is pivotably connected to a flap (15),
**characterized therein,**
that the flap (15) in the longitudinal direction of the ramp is supported in a linearly displaceable manner in guides (28), fixedly connected to the quay structure (14), and that at some distance from the pivot (21) common to the ramp (11) and the flap (15) there is provided on the ramp (11) and on the flap (15) least one actuator (25) intended for pivoting the traffic access ramp relative to the flap about said pivot.

2. A ramp as claimed in claim 1,
**characterized therein,**
that the flap (15) is displaceable along a plane (32) sloping towards the water surface (27).

3. A ramp as claimed in claim 1,
**characterized therein,**
that the flap (15) is provided with at least a couple of sliding members (30), e.g. in form of rollers, which are provided for cooperating with the guides (28).

4. A ramp as claimed in claim 1,
**characterized therein,**
that energy absorbers (19) are provided at the spaced apart quay structures (14) outside the ramp.

5. A ramp as claimed in claim 1,
**characterized therein,**
that several ramps (11) are connected in parallel for creating a multi-ferry berth.

## Patentansprüche

1. Eine Rampe (11) für einen Fährenanlegesteg oder ähnlichen, deren eines Ende (13) elastisch mit einer Quaystruktur (14) verbunden ist und deren anderes Ende (16), das vertikal relativ zu der Wasseroberfläche (27) einstellbar ist, von einem schwimmenden Element (17) getragen wird und wobei die Rampe quayseitig schwenkbar mit einer Landeklappe (15) verbunden ist, dadurch gekennzeichnet, daß die Landeklappe (15) in Längsrichtung der Rampe in linear versetzbarer Weise in Führungen (28) getragen wird, die fest mit der Quaystruktur (14) verbunden sind und daß in einem gewissen Abstand von dem der Rampe (11) und der Landeklappe (15) gemeinsamen Schwenkpunkt (21), auf der Rampe (11) und auf der Landeklappe (15) wenigstens ein Betätigungsorgan (25) vorgesehen ist, das dazu dient, die Verkehrzugangsrampe relativ zu der Landeklappe um den Schwenkpunkt zu verschwenken.

2. Eine Rampe nach Anspruch 1, dadurch gekennzeichnet, daß die Landeklappe (15) entlang einer in Richtung der Wasseroberfläche (27) geneigten Ebene (32) verschieb- bzw. versetzbar ist.

3. Eine Rampe nach Anspruch 1, dadurch gekennzeichnet, daß die Landeklappe (15) mit wenigstens einem Paar von Verschiebeteilen (30), beispielsweise in Form von Rollen, versehen ist, die zum Zusammenwirken mit den Führungen (28) vorgesehen sind.

4. Eine Rampe nach Anspruch 1, dadurch gekennzeichnet, daß Energieabsorptionselemente (19) an den voneinander beabstandeten Quaystrukturen (14) außerhalb der Rampe vorgesehen sind.

5. Eine Rampe nach Anspruch 1, dadurch gekennzeichnet, daß mehrere Rampen (11) parallel miteinander verbunden sind zur Erzeugung eines Anlegesteges für mehrere Fähren.

## Revendications

1. Ponton (11) pour poste d'amarrage de bateaux ferry ou analogues, dont l'une des extrémités (13) est reliée de manière élastique à une structure de quai (14) et dont l'extrémité opposée (16), qui est réglable verticalement par rapport à la surface de l'eau (27), repose sur un élément flottant (17), ponton qui, en outre, est relié, du côté du quai, à un volet (15) de manière pivotante, caractérisé en ce que le volet (15) repose, dans la direction longitudinale du ponton, dans des glissières de guidage (28) reliées fixement à la structure de quai (14) de manière à pouvoir être déplacé de façon linéaire, et en ce qu'à une certaine distance du pivot (21) commun au ponton (11) et au volet (15) est prévu, sur le ponton (11) et sur le volet (15), au moins un vérin (25) destiné à faire pivoter la rampe d'accès des véhicules par rapport au volet sur ledit pivot.

2. Ponton selon la revendication 1, caractérisé en ce que le volet (15) peut être déplacé le long d'un plan (32) incliné en direction de la surface de l'eau (27).

3. Ponton selon la revendication 1, caractérisé en ce que le volet (15) est muni d'au moins une paire d'éléments coulissants (30), par exemple sous forme de galets, qui sont prévus pour coopérer avec les glissières de guidage (28).

4. Ponton selon la revendication 1, caractérisé en ce que des absorbeurs d'énergie (19) sont prévus sur les structures de quai (14) espacées à l'extérieur du ponton.

5. Ponton selon la revendication 1, caractérisé en ce que plusieurs pontons (11) sont reliés dans une disposition parallèle pour former un poste d'amarrage pour plusieurs bateaux ferry.
